# EUROPEAN PATENT APPLICATION

(11) **EP 4 797 754 A1**
(43) Date of publication of application: **26.08.2026**
(21) Application number: 24887875.3
(22) Date of filing: 01.11.2024
(51) Int. Cl.: H04W 12/041

(54) **CHANNEL KEY DETERMINATION METHOD AND APPARATUS**

(30) Priority: 09.11.2023 CN 202311494080
(71) Applicant: HUAWEI TECHNOLOGIES CO., LTD., Shenzhen 518129 (CN)
(72) Inventor: XIANG, Hongyu, Shenzhen, Guangdong 518129 (CN); CHEN, Lei, Shenzhen, Guangdong 518129 (CN)
(74) Representative: Körber, Martin Hans
(86) International application number: PCT/CN2024/129383
(87) International publication number: WO 2025/098263

(57) **Abstract**

A channel key determining method and an apparatus are provided. The method includes: receiving first configuration information from a network device, where the first configuration information indicates M parameter sets, and each parameter set corresponds to one preset condition; determining a first channel measurement result based on a first reference signal from the network device; and determining a first channel key based on the first channel measurement result when the first channel measurement result and N parameter sets meet N preset conditions corresponding to the N parameter sets, where the first channel key is used to perform encryption or integrity protection on data of the network device. In the foregoing method, the preset condition corresponding to each parameter set is a generation condition of a channel key. When the first channel measurement result and the N parameter sets meet the N preset conditions, it indicates that the first channel measurement result can be used to generate the channel key. Therefore, security of generating the channel key based on the first channel measurement result is high, so that data transmission security can be improved.

## Description

### CROSS-REFERENCE TO RELATED APPLICATIONS

This application claims priority to Chinese Patent application No. 202311494080.6, filed with the China National Intellectual Property Administration on November 9, 2023 and entitled "CHANNEL KEY DETERMINING METHOD AND APPARATUS", which is incorporated herein by reference in its entirety.

### TECHNICAL FIELD

This application relates to the field of communication technologies, and in particular, to a channel key determining method and an apparatus.

### BACKGROUND

In wireless communication, communication security is a quite important factor, and relates to security assurance of user data. A rogue base station attack is a common means that threatens wireless security. A rogue base station is an unauthorized base station, and usually includes a simple wireless device and dedicated open-source software. The rogue base station may send signaling to a target terminal device according to a related protocol by simulating an authorized base station, to obtain related information of the target terminal. Especially, before the terminal device initially accesses the base station, because in this case, a security mode is not activated and the signaling is not integrity protected and encrypted, the terminal device cannot verify signaling message integrity, and a third party may eavesdrop on a plaintext message transparently transmitted between the base station and the terminal.

Currently, there is a key generation solution based on channel measurement. In this way, before accessing a base station, a terminal device may determine a channel key based on a channel measurement result. However, if a signal-to-noise ratio of a channel is small or the channel is quasi-static, a generated channel key is unreliable. Therefore, when the channel key between the base station and the terminal device is determined based on the channel measurement result is an urgent problem to be resolved.

### SUMMARY

This application provides a channel key determining method and an apparatus, to provide an effective condition of a channel key and improve data security.

According to a first aspect, this application provides a channel key determining method. The method is performed by a terminal device or a module or a chip in the terminal device. An example in which the method is performed by the terminal device is used for description herein. The method includes: receiving first configuration information from a network device, where the first configuration information indicates M parameter sets, each parameter set orresponds to one preset condition, one parameter set includes at least one parameter corresponding to a channel feature or channel quality, and M is an integer greater than 0; determining a first channel measurement result based on a first reference signal from the network device; and determining a first channel key based on the first channel measurement result when the first channel measurement result and N parameter sets meet N preset conditions corresponding to the N parameter sets, where the N parameter sets are parameter sets of the M parameter sets, N is an integer greater than 0, and the first channel key is used to perform encryption or integrity protection on data of the network device.

In the foregoing method, the preset condition corresponding to each parameter set is a generation condition or an enabling condition of a channel key. When the first channel measurement result and the N parameter sets meet the N preset conditions, it indicates that the first channel measurement result can be used to generate the channel key. Therefore, security of generating the channel key based on the first channel measurement result is high, so that data transmission security can be improved.

In a possible implementation, the M parameter sets include at least one of a first parameter set and a second parameter set.

A parameter included in the first parameter set is a parameter corresponding to the channel feature, where the channel feature is at least one of the following: a received signal envelope, a channel impulse response, received signal power, and a received signal phase. A parameter included in the second parameter set is a parameter corresponding to the channel quality, where the channel quality includes a signal-to-noise ratio.

In a possible implementation, when the channel feature is the received signal envelope, the channel impulse response, or the received signal power, the parameter included in the first parameter set is a first threshold and first duration that correspond to the received signal envelope, the channel impulse response, or the received signal power. A preset condition corresponding to the first parameter set includes: The channel measurement result is obtained within the first duration, and an absolute value of a difference between the first value of the channel feature included in the channel measurement result and a preset first reference value is greater than or equal to the first threshold.

In the foregoing method, when the obtained channel measurement result meets the preset condition corresponding to the first parameter set, the received signal envelope, the channel impulse response, or the received signal power changes quickly. Therefore, when the received signal envelope, the channel impulse response, or the received signal power is quantized, an overlap rate of bit streams obtained through two consecutive times of sampling and quantization is low. Therefore, security of a channel key obtained based on the bit streams is high, so that data transmission security can be improved.

In a possible implementation, when the channel feature is the received signal phase, the parameter included in the first parameter set are a second threshold and second duration that correspond to the received signal phase. A preset condition corresponding to the first parameter set includes: The channel measurement result is obtained within the second duration, and the channel measurement result includes at least two second values of the channel feature, and an absolute value of a difference between two adjacent second values of the at least two second values is greater than or equal to the second threshold.

In the foregoing method, when the channel feature is the received signal phase, and the obtained channel measurement result meets the preset condition corresponding to the first parameter set, the received signal phase changes greatly. Therefore, when the received signal phase is quantized, an overlap rate of bit streams obtained through two consecutive times of sampling and quantization is low. Therefore, security of a channel key obtained based on the bit streams is high, so that data transmission security can be improved.

In a possible implementation, the channel quality is the signal-to-noise ratio, and the parameter included in the second parameter set is a third threshold.

A preset condition corresponding to the second parameter set includes: The channel measurement result includes at least one third value of the channel quality, and the at least one third value is greater than or equal to the third threshold.

In the foregoing method, when the channel quality is the signal-to-noise ratio, and the obtained channel measurement result meets the preset condition corresponding to the first parameter set, it indicates that a channel environment is good. When the channel key is generated based on the channel feature, a quantization error when the channel feature is quantized is small, and a success rate of generating the channel key based on the channel measurement result is high.

In a possible implementation, the determining the first channel key based on the first channel measurement result includes: determining a value of a first channel feature based on the first channel measurement result, where the first channel feature is at least one of the following: a received signal envelope, a channel impulse response, received signal power, and a received signal phase; and determining the first channel key based on the value of the first channel feature.

In a possible implementation, the method further includes: sending a first preamble to the network device, where the first preamble indicates the first channel feature.

The foregoing method is applicable to an initial access phase of the terminal device. In the initial access phase, the terminal device initiates random access by sending the preamble. In this way, the preamble can be multiplexed to indicate the first channel feature, thereby reducing power consumption of the terminal device and improving resource utilization.

In a possible implementation, the method further includes: receiving second configuration information from the network device, where the second configuration information includes a correspondence between the first preamble and the first channel feature.

In a possible implementation, the method further includes: sending a second reference signal to the network device, where the second reference signal indicates the first channel feature.

In a possible implementation, the method further includes: receiving third configuration information from the network device, where the third configuration information includes a correspondence between the second reference signal and the first channel feature.

In a possible implementation, the method further includes: receiving correction information from the network device, where the correction information is determined based on a second channel key, and the second channel key is determined by the network device based on the second reference signal; and
correcting the first channel key based on the correction information, to obtain a corrected first channel key.

In a possible implementation, the method further includes: sending first indication information to the network device, where the first indication information indicates to use the corrected first channel key to perform encryption or integrity protection on data.

In a possible implementation, the first configuration information is located in a system information block, a radio resource control RRC release message, or an RRC reconfiguration message.

According to a second aspect, this application provides a channel key determining method. The method is performed by a network device or a module or a chip in the network device. An example in which the method is performed by the network device is used for description herein. The method includes: sending first configuration information from a terminal device, where the first configuration information indicates M parameter sets, each parameter set corresponds to one preset condition, one parameter set includes at least one parameter corresponding to a channel feature or channel quality, and M is an integer greater than 0; measuring a second reference signal from the terminal device, to obtain a second channel measurement result; and determining a second channel key based on the second channel measurement result, where the second channel key is used to perform encryption or integrity protection on data of the terminal device.

In a possible implementation, the M parameter sets include at least one of a first parameter set and a second parameter set.

A parameter included in the first parameter set is a parameter corresponding to the channel feature, where the channel feature is at least one of the following: a received signal envelope, a channel impulse response, received signal power, and a received signal phase. A parameter included in the second parameter set is a parameter corresponding to the channel quality, where the channel quality includes a signal-to-noise ratio.

In a possible implementation, when the channel feature is the received signal envelope, the channel impulse response, or the received signal power, the parameter included in the first parameter set is a first threshold and first duration that correspond to the received signal envelope, the channel impulse response, or the received signal power. A preset condition corresponding to the first parameter set includes: The channel measurement result is obtained within the first duration, and an absolute value of a difference between the first value of the channel feature included in the channel measurement result and a preset first reference value is greater than or equal to the first threshold.

In a possible implementation, when the channel feature is the received signal phase, the parameter included in the first parameter set are a second threshold and second duration that correspond to the received signal phase. A preset condition corresponding to the first parameter set includes: The channel measurement result is obtained within the second duration, and the channel measurement result includes at least two second values of the channel feature, and an absolute value of a difference between two adjacent second values of the at least two second values is greater than or equal to the second threshold.

In a possible implementation, the channel quality is the signal-to-noise ratio, and the parameter included in the second parameter set is a third threshold.

A preset condition corresponding to the second parameter set includes: The channel measurement result includes at least one third value of the channel quality, and the at least one third value is greater than or equal to the third threshold.

In a possible implementation, the determining the second channel key based on the second channel measurement result includes: receiving a first preamble from the terminal device, where the first preamble indicates a first channel feature; determining a value of the first channel feature based on the second channel measurement result, where the first channel feature is at least one of the following: a received signal envelope, a channel impulse response, received signal power, and a received signal phase; and determining the second channel key based on the value of the first channel feature.

In a possible implementation, the determining the second channel key based on the second channel measurement result includes: determining, based on the second channel measurement result, a value of a first channel feature corresponding to the second reference signal, where the first channel feature is at least one of the following: a received signal envelope, a channel impulse response, received signal power, and a received signal phase; and
determining the second channel key based on the value of the first channel feature.

In a possible implementation, the method further includes: sending correction information to the terminal device, where the correction information is determined based on the second channel key, the correction information is used to correct a first channel key, and the first channel key is a channel key determined by the terminal device.

In a possible implementation, the configuration information is located in a system information block SIB 2, a radio resource control RRC release message, or an RRC reconfiguration message.

According to a third aspect, this application further provides a communication apparatus. The communication apparatus can implement any method provided in any one of the first aspect and the second aspect. The communication apparatus may be implemented by hardware, or may be implemented by hardware executing corresponding software. The hardware or software includes one or more units or modules corresponding to the foregoing function.

In a possible implementation, the communication apparatus includes a processor. The processor is configured to support the communication apparatus in performing a corresponding function of the network device, the terminal device, or a core network device in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device, for example, the terminal device.

In a possible implementation, the communication apparatus includes corresponding function modules respectively configured to implement the steps in the foregoing methods. The function may be implemented by hardware, or may be implemented by hardware executing corresponding software. The hardware or software includes one or more modules corresponding to the foregoing function.

In a possible implementation, a structure of the communication apparatus includes a processing unit and a communication unit. These units may perform a corresponding function in the foregoing method examples. For details, refer to descriptions in the method provided in any one of the first aspect and the second aspect. Details are not described herein again.

According to a fourth aspect, a communication apparatus is provided, including a processor and an interface circuit. The interface circuit is configured to: receive a signal from a communication apparatus other than the communication apparatus and transmits the signal to the processor, or send a signal from the processor to a communication apparatus other than the communication apparatus. The processor implements the function modules of the method provided in any possible implementation of any one of the first aspect and the second aspect by using a logic circuit or by executing a computer program or instructions. Optionally, the communication apparatus further includes a memory, and the memory is configured to store a computer program or instructions.

According to a fifth aspect, a computer-readable storage medium is provided. The computer-readable storage medium stores a computer program or instructions. When the computer program or the instructions are executed by a processor, the method provided in any possible implementation of any one of the first aspect and the second aspect is implemented.

According to a sixth aspect, a computer program product storing instructions is provided. When a computer reads and executes the computer program product, the method provided in any possible implementation of any one of the first aspect and the second aspect is implemented.

According to a seventh aspect, a circuit is provided. The circuit is configured to perform the method provided in any possible implementation of any one of the first aspect and the second aspect. The circuit may include a chip circuit. Optionally, the circuit may be further coupled to a memory.

According to an eighth aspect, a chip is provided. The chip includes a processor. When executing a computer program or instructions, the processor is configured to implement the method provided in any possible implementation of any one of the first aspect and the second aspect. Optionally, the chip may further include a memory. The chip may include a chip, or may include a chip and another discrete component.

According to a ninth aspect, a communication apparatus is provided, including a processor. The processor implements the method provided in any possible implementation of any one of the first aspect and the second aspect by using a logic circuit or by executing a computer program or instructions.

According to a tenth aspect, a communication apparatus is provided, including a unit or a module configured to perform the method provided in any possible implementation of any one of the first aspect and the second aspect.

According to an eleventh aspect, an embodiment of this application further provides a communication system. The communication system includes: a terminal device configured to implement the method provided in the first aspect and any possible implementation of the first aspect; and a network device configured to implement the method provided in the second aspect and any possible implementation of the second aspect.

### BRIEF DESCRIPTION OF DRAWINGS

FIG. 1 is a diagram of an architecture of a network device according to an embodiment of this application;
FIG. 2 is a diagram of a rogue base station according to an embodiment of this application;
FIG. 3 is a diagram of a man-in-the-middle attack according to an embodiment of this application;
FIG. 4 is a diagram of a network architecture to which an embodiment of this application is applicable;
FIG. 5 is a schematic flowchart of a key generation method according to an embodiment of this application;
FIG. 6 is a schematic flowchart of air interface integrity protection according to an embodiment of this application;
FIG. 7 is a schematic flowchart of air interface encryption according to an embodiment of this application;
FIG. 8 is a schematic flowchart of a channel key determining method according to an embodiment of this application;
FIG. 9 is a schematic flowchart of air interface integrity protection according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram a structure of a communication apparatus according to an embodiment of this application.

### DESCRIPTION OF EMBODIMENTS

The following describes technical solutions in embodiments of this application with reference to accompanying drawings in embodiments of this application. Apparently, the described embodiments are merely some rather than all of embodiments of this application. In this application, the terms "first", "second", and corresponding term numbers are intended to distinguish between similar objects but do not necessarily describe a specific order or sequence. It should be understood that the terms used in such a way are interchangeable in proper circumstances. This is merely a differentiation manner that is used when objects having a same attribute are described in embodiments of this application. In addition, the terms "include", "have" and any variant thereof are intended to cover non-exclusive inclusion, so that a process, method, system, product, or device that includes a series of units is not necessarily limited to those units, but may include other units not expressly listed or inherent to the process, method, product, or device. A method and an apparatus provided in embodiments of this application are based on a same or similar technical concept. Because problem resolving principles of the method and the apparatus are similar, mutual reference may be made to implementations of the apparatus and the method. Repeated descriptions are not described.

A method provided in embodiments of this application may be applied to various mobile communication systems, for example, an Internet of Things (Internet of Things, IoT), a narrowband Internet of Things (narrowband internet of things, NB-IoT), a 4th generation (4th generation, 4G) communication system (for example, long term evolution (long term evolution, LTE)), a 5th generation (5th generation, 5G) communication system (for example, 5G new radio (new radio, NR)), an LTE and NR hybrid architecture, or a new communication system emerging in 6G or future communication development. The communication system may further include a machine to machine (machine to machine, M2M) network, machine type communication (machine type communication, MTC), or another network.

The following first describes some terms in embodiments of this application, to facilitate understanding of a person skilled in the art.
In embodiments of this application, a network device may be a device in a wireless network, and the network device may also be referred to as a network apparatus, a radio access network device, or an access network device. For example, the network device may be a radio access network (radio access network, RAN) node that connects a terminal device to the wireless network, and may also be referred to as the access network device. The network device includes but is not limited to: a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, or an access node in a wireless fidelity (wireless fidelity, WiFi) system; or may be a module or unit that implements some functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, may be a micro base station or an indoor base station, or may be a relay node, a donor node, or the like. A specific technology and a specific device form that are used by the network device are not limited in this application.

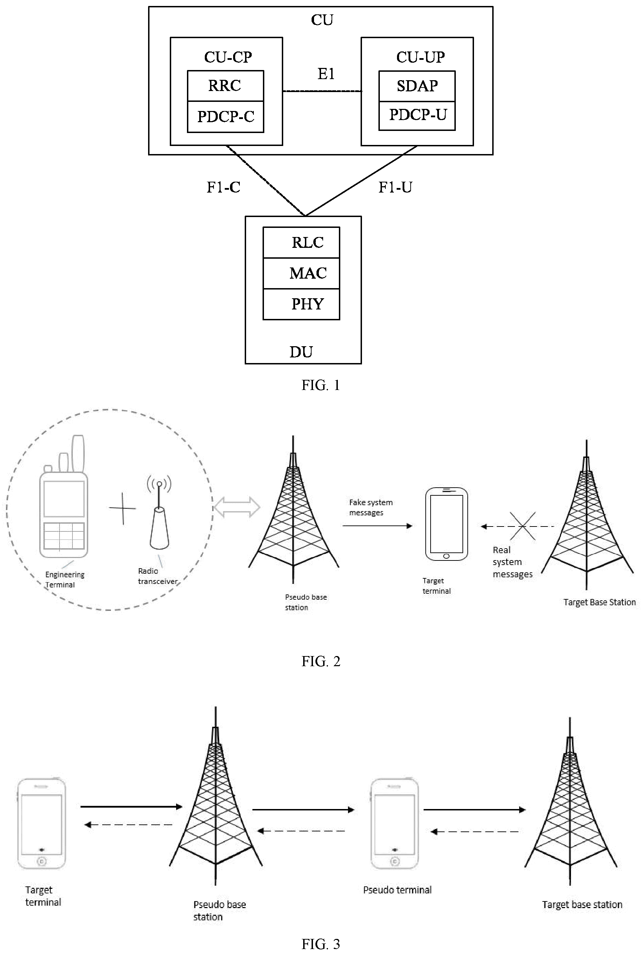

As shown in FIG. 1, in some implementations, the network device may include a central unit (central unit, CU) and a distributed unit (distributed unit, DU). A RAN device including a CU node and a DU node splits protocol layers of a gNB in an NR system. Functions of some protocol layers are centrally controlled by the CU. Functions of some or all remaining protocol layers are distributed in the DU, and the CU centrally controls the DU. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption and decryption, integrity protection, data transmission, and the like on the control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of a core network and mapping a flow (flow) to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP indicates that the gNB is connected to the core network through an NG interface and is connected to the DU through an F1 interface control plane (namely, F1-C). The CU-UP is connected to the DU through an F1 interface user plane (namely, F1-U). It is clear that, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. The network device may further include an active antenna unit (active antenna unit, AAU). The CU implements some functions of the gNB, and the DU implements some functions of the gNB. For example, the CU is responsible for processing a non-real-time protocol and service, to implement a function of an RRC layer. The DU is responsible for processing a physical layer protocol and a real-time service, and implementing functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

The terminal device in embodiments of this application may be a wireless terminal apparatus that can receive scheduling and indication information from the network apparatus. The terminal device may be referred to as a terminal apparatus, and may also be referred to as user equipment (user equipment, UE), a terminal, a mobile station (mobile station, MS), a mobile terminal (mobile terminal, MT), or the like. The terminal apparatus may be a device that includes a wireless communication function (providing voice/data connectivity to a user), for example, a handheld device, a vehicle-mounted device, or a vehicle-mounted module that has a wireless connection function. Currently, some examples of the terminal apparatus are: a mobile phone (mobile phone), a tablet computer, a notebook computer, a palmtop, a mobile internet device (mobile internet device, MID), a wearable device, a virtual reality (virtual reality, VR) device, an augmented reality (augmented reality, AR) device, a wireless terminal in industrial control (industrial control), a wireless terminal in vehicle-to-everything, a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a device-to-device (device-to-device, D2D) communication terminal apparatus, a vehicle-to-everything (vehicle-to-everything, V2X) communication terminal apparatus, an intelligent vehicle, an in-vehicle infotainment system (or referred to as a vehicle-mounted sending unit) (telematics box, T-box), a machine-to-machine/machine type communication (machine-to-machine/machine type communication, M2M/MTC) terminal apparatus, an Internet of Things (Internet of Things, IoT) terminal apparatus, and the like. For example, the terminal apparatus may be a vehicle-mounted device, an entire vehicle device, a vehicle-mounted module, a vehicle, an on board unit (on board unit, OBU), a road side unit (road side unit, RSU), a T-box, a chip, a system-on-a-chip (system-on-a-chip, SoC), or the like. The chip or the SoC may be mounted in the vehicle, the OBU, the RSU, or the T-box. The wireless terminal in the industrial control may be a camera, a robot, or the like. The wireless terminal in the smart home may be a television, an air conditioner, a sweeper, a speaker, a set-top box, or the like. The terminal device may alternatively be a V2X device, for example, a smart car (smart car or intelligent car), a digital car (digital car), a driverless car (unmanned car, driverless car, pilotless car, or automobile), a self-driving car (self-driving car or autonomous car), a battery electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road side unit, RSU). The terminal device may alternatively be a device in device to device (device to device, D2D) communication, for example, an electricity meter or a water meter. In addition, in embodiments of this application, the terminal device may alternatively be a terminal device in an IoT system. The IoT is an important part of future information technology development. A main technical feature of the IoT is to connect an object to a network by using a communication technology, to implement an intelligent network for human-machine interconnection and thing-thing interconnection.

In this application, predefined content is usually defined in a standard, does not need to be configured by another device, and is information recorded/written in advance in hardware and/or software of the terminal apparatus, or may be understood as information that cannot be changed by the network apparatus or another terminal apparatus. Preconfigured content is usually information recorded/written in advance in the hardware and/or the software of the terminal apparatus, is determined by a factory device manufacturer, and may be changed through software or hardware.

(Pre)configuration may be classified into network apparatus (pre)configuration and terminal apparatus (pre)configuration. In a case of network apparatus (pre)configuration, the (pre)configuration may be performed based on a system information block (system information block, SIB) or RRC signaling. In a case of terminal apparatus (pre)configuration, the (pre)configuration may be performed based on PC5-RRC signaling.

Channel measurement means that a receive end measures a signal of a transmit end, to obtain various parameters such as receive power, a phase, an envelope amplitude, and a signal-to-noise ratio of the signal. These parameters may represent a transmission feature of a channel between the receive end and the transmit end.

A rogue base station attack means that a network attacker places an unauthorized base station in a coverage area of a target base station, and the rogue base station can cause a nearby target terminal to perform cell reselection, location update, and cell switching, to deceive the terminal, or provide error information to the terminal, and achieve an objective of spreading a virus, performing network fraud, and the like.

For example, as shown in FIG. 2, the rogue base station may include an engineering computer/engineering mobile phone, a cable, a wireless transceiver, and the like, and is disguised as a base station of a mobile communication operator, to inveigle the terminal and initiate an attack. The rogue base station attack may be initiated by forging a system message, and the fake system message overwrites a real system message in a network. Consequently, the target terminal denies a service of the target base station. In addition, the rogue base station may further inveigle the terminal into initiating a network registration or location update request to the rogue base station, to attract the target terminal to camp on the rogue base station, and extract information about the terminal. In this case, the terminal is disconnected from a normal network and cannot obtain a network service. The rogue base station may further perform information transfer with the terminal. For example, the rogue base station sends a fraud message, a malicious network link, an abusive message, or the like to the terminal.

The rogue base station may further intercept communication data between the target base station and the terminal, to monitor private data of a user. When the rogue base station initiates a spoofing attack on the terminal, normal communication between the network and the terminal is further interfered with, and network performance is affected.

A man-in-the-middle attack means that a rogue base station forwards, in combination with a rogue terminal, encrypted data between a terminal and a network in a relay and forwarding form, to tamper with data without integrity protection to initiate an attack.

For example, as shown in FIG. 3, on an uplink over which a target terminal transmits data to a target base station, a rogue base station receives communication data of the target terminal, and transparently transmits the communication data to the target base station through the rogue terminal. Correspondingly, on a downlink over which the target base station transmits data to the target terminal, the rogue terminal receives communication data of an authorized base station, tamper with the received data through the rogue base station, and then transparently transmits the received data to the target terminal.

In this process, it is very difficult for the target terminal and the target base station to perceive existence of the rogue base station and the rogue terminal. If integrity protection is not performed on the communication data between the target terminal and the target base station, an attack, for example, data tampering or packet discarding, may occur.

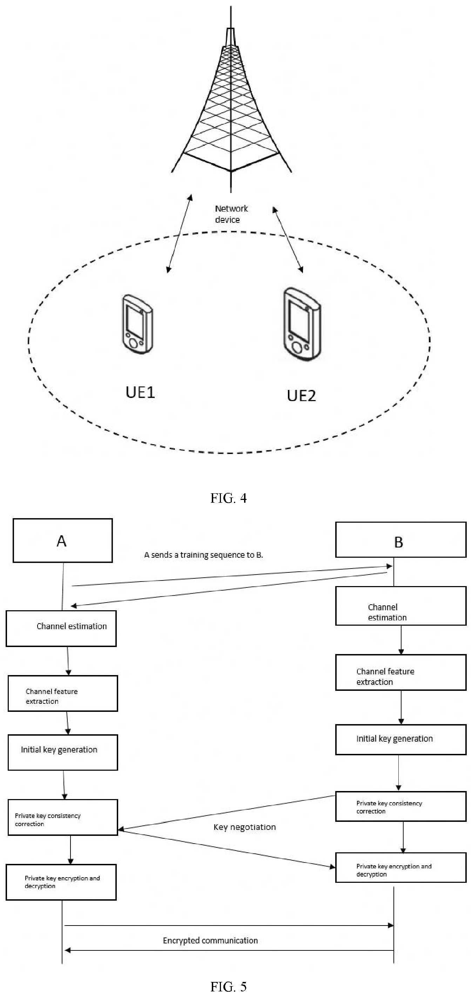

FIG. 4 is a diagram of a network architecture according to an embodiment of this application. The network architecture may include a network device and at least one terminal device, for example, UE 1 and UE 2. The foregoing network architecture may be an architecture in an LTE system, or may be an architecture in an NR system, or may be an LTE-NR hybrid architecture, or may be an architecture in a new communication system emerging in 6G or future communication development. This is not limited in this application.

To avoid a rogue base station attack and a man-in-the-middle attack, encryption or integrity protection may be performed on data between the network device and the terminal device by using a channel key. In this application, the channel key may be generated by the network device and the terminal device by using a channel key generation technology. Channel key generation technology: In time division duplex (time division duplex, TDD) communication in a wireless communication system, two communication parties send and receive data in different time periods, but uplink transmission and downlink transmission are performed at a same frequency. Uplink and downlink signals experience similar environments in a wireless channel, and have short-time reciprocity. Therefore, shared information of the common channel of the two communication parties is extracted, to generate an encryption key. Based on the short-term reciprocity of the channel, channel features measured by the two communication parties at a same moment are the same, and the channel features may be used as a random source for generating a key. In addition, because a communication channel changes with time, an obtained channel key is automatically updated, and an updated key is unpredictable for an eavesdropper.

For example, FIG. 5 is a schematic flowchart of a key generation method based on a channel measurement result. A in the figure may be the terminal device in FIG. 4, and B in the figure may be the network device in FIG. 4. Alternatively, A in the figure may be the network device in FIG. 4, and B in the figure may be the terminal device in FIG. 4. A and B respectively generate keys based on channel measurement results, including a process of channel estimation, channel feature extraction, initial key generation, key consistency correction, and key encryption and decryption.

In a channel estimation phase, A sends a training sequence to B. For example, the training sequence may be specifically a demodulation reference signal (Demodulation Reference Signal, DMRS), and B receives the training sequence and performs channel estimation to obtain a channel measurement result Y_{B}. B sends a training sequence to A, and A receives the training sequence and performs channel estimation to obtain a channel measurement result Y_{A}. Because a channel does not change within a channel coherence time, theoretically, Y_{A}=Y_{B}.

The channel measurement result includes measurement values of various channel features that are obtained in a process of measuring the training sequence. For example, the training sequence sent by A is sent to B in a form of a radio signal. B measures the radio signal corresponding to the training sequence, and obtains measurement values such as received signal power and a received signal phase of the radio signal. Therefore, the channel measurement result may include a measurement value of at least one of the following channel features: received signal power (Received Signal Strength, RSS), a received signal envelope, a channel impulse response (channel impulse response, CIR), and a received signal phase. The channel measurement result may further include other information, for example, may further include a signal-to-noise ratio (signal-to-noise ratio, SNR) or a signal-to-interference-plus-noise ratio (signal-to-interference-plus-noise ratio, SINR). The signal-to-noise ratio may be referred to as an SNR for short.

After obtaining the channel measurement results, A and B may respectively generate an initial key by using a same channel feature. A side of A is used as an example. When the channel feature extracted from the channel measurement result Y_{A} is the RSS, A may determine a string of bit values based on comparison between the RSS and a threshold, and use the string of bit values obtained through a plurality of times of comparison as an initial key K_{A}. Correspondingly, B compares the RSS in the channel measurement result Y_{B} with the threshold, and obtains an initial key Y_{B} by using the same method. Theoretically, Y_{A}=Y_{B}. However, due to an actual problem, for example, a measurement error, finally obtained initial keys K_{A} and K_{B} may not be equal. Therefore, key consistency correction is required, and bits in the initial keys K_{A} and K_{B} that are different need to be checked and modified. Finally, A and B may obtain same bit streams G_{A} and G_{B}, and use the bit streams G_{A} and G_{B} as encryption keys to implement encryption or integrity protection between A and B. The following briefly describes an air interface integrity protection process and an air interface encryption process.

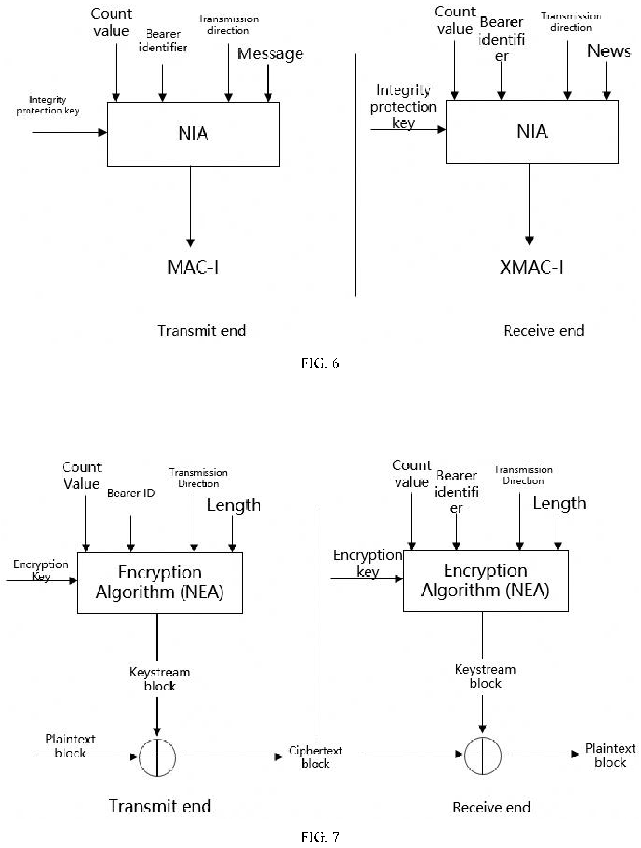

Air interface integrity protection: A transmit end performs an operation on a parameter that changes regularly and transmitted data based on a specific rule, to obtain a message authentication code for integrity (message authentication code for integrity, MAC-I). A receive end performs an operation on the same parameter based on a same algorithm, to obtain an expected message authentication code for integrity (expected message authentication code for integrity, XMAC-I), and verifies the MAC-I and XMAC-I to determine whether received data is complete, to achieve an objective of protecting data integrity. As shown in FIG. 6, an NR integrity protection algorithm (NR integrity protection algorithm, NIA) is used as an example. Input parameters of the NIA may include an integrity protection key KEY, a count value (COUNT) of a PDCP packet, a bearer identifier, a transmission direction (DIRECTION), and a to-be-transmitted message (namely, MESSAGE). When sending a message, the transmit end appends the MAC-I to the message. The receive end computes the XMAC-I of a received message in the same way and verifies message integrity by comparing the MAC-I with the XMAC-I. The transmission direction is uplink or downlink. For example, 0 indicates that the transmission direction is uplink, and 1 indicates that the transmission direction is downlink.

The air interface encryption protection process is similar to the integrity protection process. As shown in FIG. 7, input parameters of an air interface encryption algorithm include an encryption key KEY, a count value (COUNT) of a PDCP packet, a bearer identifier, a transmission direction (DIRECTION), and a required keystream length (LENGTH). During encryption, a transmit end generates a keystream block (KEYSTREAMBLOCK) based on the input parameters, and generates a ciphertext block (CIPHERTEXTBLOCK) after an exclusive OR operation is performed on the keystream block and a plaintext block (PLAINTEXTBLOCK). At a receive end, a same keystream block is generated based on the same input parameters, and an exclusive OR operation is performed on the ciphertext block, to recover the plaintext block.

When the method provided in this application is applied to the network architecture in FIG. 4, a function of the network device may also be performed by a module (for example, a chip) in the network device, or may be performed by a control subsystem including the function of the network device. The control subsystem including the function of the network device herein may be a control center in the foregoing application scenarios such as smart grid, industrial control, smart transportation, and smart city. A function of the terminal device may be performed by a module (for example, a chip or a modem) in the terminal device, or may be performed by an apparatus including the function of the terminal device.

The network architecture and a service scenario that are described in embodiments of this application are intended to describe the technical solutions in embodiments of this application more clearly, but do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

It may be understood that a specific structure of an execution entity of the method provided in embodiments of this application is not particularly limited in this application, and the method may be applied to a module in the terminal device or a module in the network device, provided that a program that records code of the method provided in embodiments of this application can be run to perform communication according to the method provided in embodiments of this application. The following uses interaction between the terminal device and the network device as an example for description.

If a channel measurement result is used to generate a channel key, in some cases, security of the generated channel key is low. For example, when an SNR (or an SINR) of a channel is low, because noise is large, a quantization error is increased, and an inconsistency rate between an initial key K_{A} generated by the terminal device and an initial key K_{B} generated by the network device is increased, causing a short length of a finally determined channel key and a decrease in security of the key. When the channel is quasi-static, the channel changes slowly. Therefore, an overlap rate of bit streams obtained through two consecutive times of sampling and quantization of a channel feature that is used for generating the channel key is large, and security of the channel key is also affected.

In this application, the network device indicates at least one parameter set to the terminal device, and each parameter set corresponds to one preset condition. Before generating the channel key, the terminal device may first select a parameter set from the at least one parameter set. When a channel measurement result obtained by measuring the reference signal by the terminal device meets a preset condition corresponding to the parameter set selected by the terminal device, the terminal device may generate the channel key based on the channel measurement result, and perform encryption or integrity protection by using the channel key. In this application, before generating the channel key, the terminal device first determines whether the channel measurement result meets the preset condition, and generates the channel key only when the channel measurement result meets the preset condition. In this way, security of generating the channel key based on the channel measurement result can be ensured, thereby improving data transmission security.

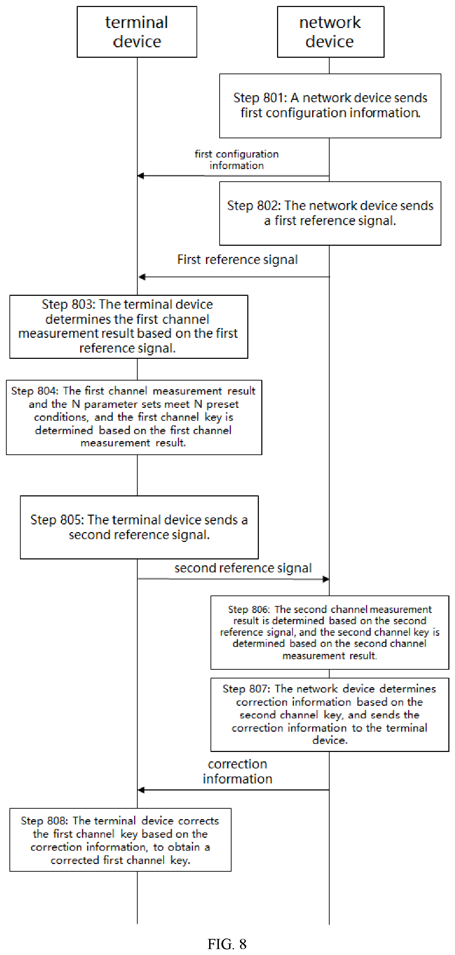

FIG. 8 is a schematic flowchart of a channel key determining method according to an embodiment of this application. The method includes the following steps.

Step 801: A network device sends first configuration information.

Correspondingly, the terminal device receives the first configuration information from the network device.

In this application, the first configuration information indicates M parameter sets, each parameter set corresponds to one preset condition, one parameter set includes at least a parameter corresponding to a channel feature or channel quality, and M is an integer greater than 0. The preset condition corresponding to each parameter set may be agreed on in a protocol, or may be preconfigured. This is not limited in this application. Further, one parameter set may correspond to the channel feature, or may correspond to the channel quality. The channel feature includes at least one of the following: a received signal envelope, a channel impulse response (channel impulse response, CIR), received signal power, and a received signal phase. The channel quality includes at least one of the following: a signal-to-noise ratio, a signal-to-interference-plus-noise ratio, and a received signal strength indicator (received signal strength indicator, RSSI).

The following separately uses an example in which a parameter included in a first parameter set is the parameter corresponding to the channel feature and an example in which a parameter included in a second parameter set is the parameter corresponding to the channel quality, to describe the parameter included in the first parameter set and a corresponding preset condition and describe the parameter included in the second parameter set and a corresponding preset condition.

Implementation 1: When the channel feature is the received signal envelope, the parameter included in the first parameter set is a first threshold and first duration that correspond to the received signal envelope, and the preset condition corresponding to the first parameter set includes:
A channel measurement result is obtained within the first duration, and an absolute value of a difference between a first value of the received signal envelope included in the measurement result and a preset first reference value is greater than or equal to the first threshold. The preset first reference value may be a value of the received signal envelope obtained by measuring a channel when the terminal device performs cell reselection or selects a new cell.

Implementation 2: When the channel feature is the channel impulse response, the parameter included in the first parameter set is a first threshold and first duration that correspond to the channel impulse response, and the preset condition corresponding to the first parameter set includes:
A channel measurement result is obtained within the first duration, and an absolute value of a difference between a first value of the received signal envelope included in the measurement result and a preset first reference value is greater than or equal to the first threshold. The preset first reference value may be a value of the channel impulse response obtained by measuring a channel when the terminal device performs cell reselection or selects a new cell.

Implementation 3: When the channel feature is the received signal power, the parameter included in the first parameter set is a first threshold and first duration that correspond to the received signal power, and the preset condition corresponding to the first parameter set includes:
A channel measurement result is obtained within the first duration, and an absolute value of a difference between a first value of the received signal power included in the measurement result and a preset first reference value is greater than or equal to the first threshold. The preset first reference value may be a value of the received signal power obtained by measuring a channel when the terminal device performs cell reselection or selects a new cell.

In the implementation 1 to the implementation 3, when the channel feature is the received signal envelope, the channel impulse response, or the received signal power, it can be learned from the preset condition corresponding to the first parameter set that when the obtained channel measurement result meets the preset condition corresponding to the first parameter set, the received signal envelope, the channel impulse response, or the received signal power changes quickly. Therefore, when the received signal envelope, the channel impulse response, or the received signal power is quantized, an overlap rate of bit streams obtained through two consecutive times of sampling and quantization is low. Therefore, security of a channel key obtained based on the bit streams is high, so that data transmission security can be improved.

Implementation 4: When the channel feature is the received signal phase, the parameter included in the first parameter set is a second threshold and second duration that correspond to the received signal phase, and the preset condition corresponding to the first parameter set includes:
A channel measurement result is obtained within the second duration, the measurement result includes at least two second values of the received signal phase, and an absolute value of a difference between two adjacent second values of the at least two second values is greater than or equal to the second threshold.

In the implementation 4, when the channel feature is the received signal phase, and the obtained channel measurement result meets the preset condition corresponding to the first parameter set, the received signal phase changes greatly. Therefore, when the received signal phase is quantized, an overlap rate of bit streams obtained through two consecutive times of sampling and quantization is low. Therefore, security of a channel key obtained based on the bit streams is high, so that data transmission security can be improved.

Implementation 5: When the channel quality is the signal-to-noise ratio, the parameter included in the second parameter set is a third threshold corresponding to the signal-to-noise ratio, and the preset condition corresponding to the second parameter set includes:
A channel measurement result includes at least one third value of the signal-to-noise ratio, and the at least one third value is greater than or equal to the third threshold.

In the implementation 5, when the channel quality is the signal-to-noise ratio, and the obtained channel measurement result meets the preset condition corresponding to the first parameter set, it indicates that a channel environment is good. When the channel key is generated based on the channel feature, a quantization error when the channel feature is quantized is small, and a success rate of generating the channel key based on the channel measurement result is high.

The implementation 1 to the implementation 5 are merely examples. There may be another implementation for the parameter included in each parameter set and a corresponding preset condition. Examples are not described herein one by one.

For example, the M parameter sets may include at least one of items shown in Table 1.

**Table 1**

| Parameter set | Included parameter | Corresponding channel feature or channel quality | Corresponding preset condition |
|---|---|---|---|
| Parameter set 1 | Duration T₁; and Received signal envelope threshold H₁, that is, first threshold corresponding to a received signal envelope; | Received signal envelope | A channel measurement result is obtained within the duration T₁, and an absolute value of a difference between a value \|H\| of the received signal envelope included in the channel measurement result and a preset first reference value H_{ref} is greater than or equal to the threshold H₁, that is, \|\|H\|-H_{ref}\|≥H₁ is met; |
| Parameter set 2 | Duration T₂; and Channel impulse response threshold C₂, that is, first threshold corresponding to a channel impulse response; | Channel impulse response | A channel measurement result is obtained within the duration T₂, and an absolute value of a difference between a value C of the channel impulse response included in the measurement result and a preset first reference value C_{ref} is greater than or equal to the threshold C₂, that is, \|C-C_{ref}\|≥C₂ is met; |
| Parameter set 3 | Duration T₃; and Received signal power threshold R₃, that is, first threshold corresponding to received signal power; | Received signal power | A channel measurement result is obtained within the duration T₃, and an absolute value of a difference between a value R of the channel impulse response included in the channel measurement result and a preset first reference value R_{ref} is greater than or equal to the threshold R₃, that is, \|R-R_{ref}\|≥R₃ is met; |
| Parameter set 4 | Duration T₄; and Received signal phase threshold P₄, that is, second threshold corresponding to a received signal phase; | Received signal phase | A channel measurement result is obtained within the duration T₄, the channel measurement result includes at least two values of the received signal phase, and an absolute received signal power value of a difference between two adjacent received signal phases of the at least two values is greater than or equal to the second threshold, that is, P₁-P₂≥P₄ is met, and P₁ and P₂ are the two adjacent received signal phases; |
| Parameter set 5 | Signal-to-noise ratio threshold S_{SecThreshol}, that is, third threshold corresponding to a signal-to-noise ratio; | Signal-to-noise ratio | A channel measurement result includes at least one third value of the signal-to-noise ratio, and the at least one third value is greater than or equal to the signal-to-noise ratio threshold S_{SecThreshol}. |

In Table 1, the channel feature or the channel quality corresponding to each parameter set is preset or preconfigured, and the preset condition corresponding to each parameter set is preset or preconfigured.

The first configuration information may include only one or more items in Table 1. For example, the network device may determine a channel key generation capability of the network device based on a capability of the network device and/or a capability of the terminal device, to determine use of the first configuration information. For example, assuming that the network device supports generating the channel key by using the received signal envelope or the received signal phase, and the terminal device supports generating the channel key only by using the received signal envelope, the first configuration information may only use or include the parameter set 1, and does not use or include another parameter set.

How the network device sends the first configuration information is not limited. For example, if the terminal device is in an RRC idle state, the network device may send the first configuration information through a system information block 2 (system information block 2, SIB 2). If the terminal device is in an RRC connected state, the network device may send the first configuration information by using an RRC release message or an RRC reconfiguration message. This is not limited in this application.

Step 802: The network device sends a first reference signal.

The first reference signal may be a reference signal, for example, a DMRS or a sounding reference signal (sounding reference signal, SRS). A type of the first reference signal is not limited in this application.

Optionally, the network device may periodically send a plurality of first reference signals. A quantity of first reference signals sent by the network device is not limited.

Step 803: The terminal device determines a first channel measurement result based on the first reference signal from the network device.

The terminal device may measure the first reference signal, and the obtained first channel measurement result includes a plurality of measurement values of the channel features and a plurality of measurement values of the channel quality. A specific process of obtaining these measurement values is not limited in this application, and details are not described herein again.
For example, the first channel measurement result includes at least one of the values of the following channel features or channel quality: the received signal envelope, the channel impulse response, the received signal power, the received signal phase, and the signal-to-noise ratio.

The foregoing is merely an example. The first channel measurement result may further include a value of another channel feature or other channel quality. An example is not provided herein again.

Step 804: Determine a first channel key based on the first channel measurement result when the first channel measurement result and N parameter sets meet N preset conditions corresponding to the N parameter sets.

In another implementation, if the first channel measurement result and the N parameter sets do not meet any one of the N preset conditions, it is determined that the first channel key is not generated. In this case, the first channel key may be determined in another manner. A specific manner of determining the channel key is not limited in this application.

N is an integer greater than 0, and the first channel key is used to perform encryption or integrity protection on data of the network device.

In this application, the terminal device may select the N parameter sets from the M parameter sets, and compare the first channel measurement result with parameters in the N parameter sets, to determine, based on a comparison result, whether the N preset conditions corresponding to the N parameter sets are met.
How the terminal device selects the N parameter sets is not limited in this application. For example, the terminal device selects the N parameter sets based on a key generation capability of the terminal device. For example, the M parameter sets include a parameter set corresponding to the received signal envelope and a parameter set corresponding to the received signal phase. If the terminal device supports generating the channel key only by using the received signal phase, the terminal device may select the parameter set corresponding to the received signal phase.

For another example, the terminal device selects the N parameter sets based on a key generation rate. For example, if the channel key is generated by using the received signal envelope or the received signal power, the key generation rate is low. If the channel key is generated by using the received signal phase, the key generation rate is high. If the terminal device needs to quickly generate the channel key, the terminal device may select the parameter set corresponding to the received signal envelope or the parameter set corresponding to the received signal power.
The foregoing descriptions are merely examples. There may be a plurality of implementations in a specific process of selecting the N parameter sets by the terminal device. Details are not described herein again.

Optionally, the N parameter sets selected by the terminal device include at most one parameter set corresponding to a channel feature. If the N parameter sets include the parameter set corresponding to the first channel feature, the first channel key may be determined based on a value of the first channel feature in the first channel measurement result. The first channel feature is at least one of the following: a received signal envelope, a channel impulse response, received signal power, and a received signal phase. For example, if the N parameter sets include the parameter set 1, and the channel feature corresponding to the parameter set 1 is the received signal envelope, the first signal key is determined based on a value of the received signal envelope in the first channel measurement result.

In this way, it can be ensured that a channel feature for generating the channel key is consistent with a channel feature that meets the preset condition corresponding to the parameter set, thereby improving a success rate of generating the channel key.

For example, the M parameter sets may be shown in Table 1. The terminal device selects a parameter set from the parameter set 1 to the parameter set 4 from Table 1, for example, selects the parameter set 1. In this case, the terminal device compares the value of the received signal envelope in the first channel measurement result with the parameter in the parameter set 1. If a comparison result meets the preset condition corresponding to the parameter set 1, for example, if the value of the received signal envelope is |H| and ||H|-H_{ref}|≥H1, the terminal device may generate the first channel key based on the value of the received signal envelope in the first channel measurement result.

For example, the M parameter sets may be shown in Table 1. The terminal device selects the parameter set 2 and the parameter set 5 from Table 1. If the value of the channel impulse response in the first channel measurement result is compared with the parameter in the parameter set 2, a comparison result meets the preset condition corresponding to the parameter set 2, the value of the signal-to-noise ratio in the first channel measurement result is compared with the parameter in the parameter set 5, and comparison results meet the preset condition corresponding to the parameter set 5, for example, if the value of the channel impulse response is C, the value of the signal-to-noise ratio is S, |C-C_{ref}|≥C₂ and S≥S_{SecThreshol}, the terminal device may generate the first channel key based on the value of the channel impulse response in the first channel measurement result. In this application, how the terminal device determines the first channel key based on the first channel measurement result is not limited. For example, the terminal device determines the value of the first channel feature based on the first channel measurement result, and then determines the first channel key based on the value of the first channel feature. For example, the terminal device quantizes the value of the first channel feature according to a preset quantization algorithm to obtain L bits, and uses the L bits as the first channel key. L is an integer greater than 1, for example, L is 128 or 256.

According to the foregoing procedure, the terminal device may determine the first channel key. The terminal device may further instruct the network device to generate a second channel key. For details, refer to the following procedure.

Step 805: The terminal device sends a second reference signal.

The terminal device may send a plurality of second reference signals. A quantity of second reference signals is not limited.

The second reference signal may be a DMRS, or may be an SRS. A type of the second reference signal is not limited in this application. In an implementation, a frequency domain resource for transmitting the first reference signal is the same as a frequency domain resource for transmitting the second reference signal. This can ensure that the channel measurement result obtained by the terminal device based on the first reference signal is similar to a channel measurement result obtained by the network device based on the second reference signal.

In this application, to ensure that the terminal device and the network device determine the channel key by using a same channel feature, the terminal device may further instruct to determine the channel feature used to determine the first channel key. The following provides several possible implementations in which the terminal device indicates the first channel feature.

Implementation 1: The second reference signal indicates the first channel feature.

For example, the network device may send third configuration information to the terminal device, where the third configuration information indicates correspondences between a plurality of reference signals and a plurality of channel features, for example, including a correspondence between the second reference signal and the first channel feature. When the terminal device determines the first channel key based on the value of the first channel feature, the terminal device may send the second reference signal corresponding to the first channel feature. Correspondingly, the network device may determine the first channel feature based on the second reference signal, and further determine the channel key based on the first channel feature.

In this implementation, the terminal device may multiplex the second reference signal to indicate the first channel feature without sending additional information, to reduce power consumption of the terminal device, and improve resource utilization.

Implementation 2: The terminal device may send a first preamble, where the first preamble indicates the first channel feature.

For example, the network device may send second configuration information to the terminal device, where the second configuration information indicates correspondences between a plurality of preambles and a plurality of channel features, for example, including a correspondence between the first preamble and the first channel feature. When the terminal device determines the first channel key based on the value of the first channel feature, the terminal device may send the first preamble corresponding to the first channel feature. Correspondingly, the network device may determine the first channel feature based on the first preamble, and further determine the channel key based on the first channel feature.

This implementation is applicable to an initial access phase of the terminal device. In the initial access phase, the terminal device initiates random access by sending the preamble. In this way, the preamble can be multiplexed to indicate the first channel feature, thereby reducing power consumption of the terminal device and improving resource utilization.

Implementation 3: The terminal device may explicitly indicate the first channel feature. For example, the terminal device sends channel feature information, where the channel feature information indicates the first channel feature. The network device may determine the first channel feature based on the channel feature information.
In this implementation, the terminal device directly indicates the first channel feature. This implementation is flexible, and is applicable to a plurality of scenarios.

Step 806: The network device determines a second channel measurement result based on the second reference signal, and determines the second channel key based on the second channel measurement result.

The second channel key is used to perform encryption or integrity protection on the data between the terminal device and the second channel key.

For example, the network device may determine the value of the first channel feature based on the second channel measurement result, to quantize the value of the first channel feature according to the preset quantization algorithm to obtain L bits, and use the L bits as the second channel key.

Step 807: The network device determines correction information based on the second channel key, and sends the correction information to the terminal device, where the correction information is used to correct the first channel key.

Step 808: The terminal device corrects the first channel key based on the correction information, to obtain a corrected first channel key.

Theoretically, the first channel key and the second channel key are the same. However, due to a measurement error or the like, the finally obtained first channel key and the finally obtained second channel key are the same but not necessarily the same. The network device may send the correction information (For example, the network device adds cyclic redundancy check to a bit sequence of the second channel key, and encodes by using a low-density parity-check code (Low-Density Parity-Check Code, LDPC) or a polar code, the bit sequence to which the cyclic redundancy check is added, and a bit sequence generated through encoding may send a part of the bit sequence to the terminal device as the correction information). The terminal device checks and modifies, based on the correction information, bits that are in the first channel key and that are different from bits in the second channel key. The terminal device obtains the corrected first channel key based on the correction information, and performs encryption or integrity protection on the data between the terminal device and the network device by using the corrected first channel key as an encryption key.

In an implementation, the terminal device corrects the first channel key based on the correction information, and determines, based on a cyclic redundancy check detection result, whether the correction succeeds. If the correction succeeds, the terminal device obtains the corrected first channel key, and may further send first indication information to the network device, where the first indication information instructs to perform encryption or integrity protection on the data by using the corrected first channel key. The first indication information may be carried in a message 3 in a random access process, or may be carried in another message. This is not limited in this application.

In another implementation, if the terminal device fails to correct the first channel key based on the correction information, the terminal device does not perform encryption or integrity protection on an initial access message before initially accessing the network device.

In this application, after the terminal device successfully corrects the first channel key based on the correction information, the terminal device may perform encryption or integrity protection on the data by using the corrected first channel key, and the network device may perform encryption or integrity protection on the data by using the second channel key.

For a specific process of performing encryption or integrity protection on the data by using the corrected first channel key, or a specific process of performing encryption or integrity protection on the data by using the second channel key, refer to the descriptions in FIG. 5 or FIG. 6. The specific process is not described again. In addition, in the encryption or integrity protection in FIG. 5 or FIG. 6, another parameter, for example, a cell radio network temporary identifier (cell radio network temporary identifier, C-RNTI) or a temporary C-RNTI (temporary-CRNTI, TC-RNTI), may be further used as an input parameter of an encryption algorithm or an integrity protection algorithm. This is not limited in this application.
This application is applicable to the terminal device in an initial access phase, or is applicable to the terminal device in the RRC connected mode.
Before the terminal device initially accesses the network device, the network device has not configured, for the terminal device, a key used for encryption or integrity protection. A message between the terminal device and the network device is not encrypted for protection, and may be intercepted by a rogue base station, causing a risk, for example, information leakage. If the method provided in this application is applied before initial access, the terminal device may determine a channel key based on the foregoing procedure before the initial access, so that encryption or integrity protection can be performed on a message sent to the network device in the initial access phase. Correspondingly, the network device may also generate a channel key, and perform encryption or integrity protection on the message sent to the terminal device in the initial access phase, thereby improving data transmission security in the initial access phase.

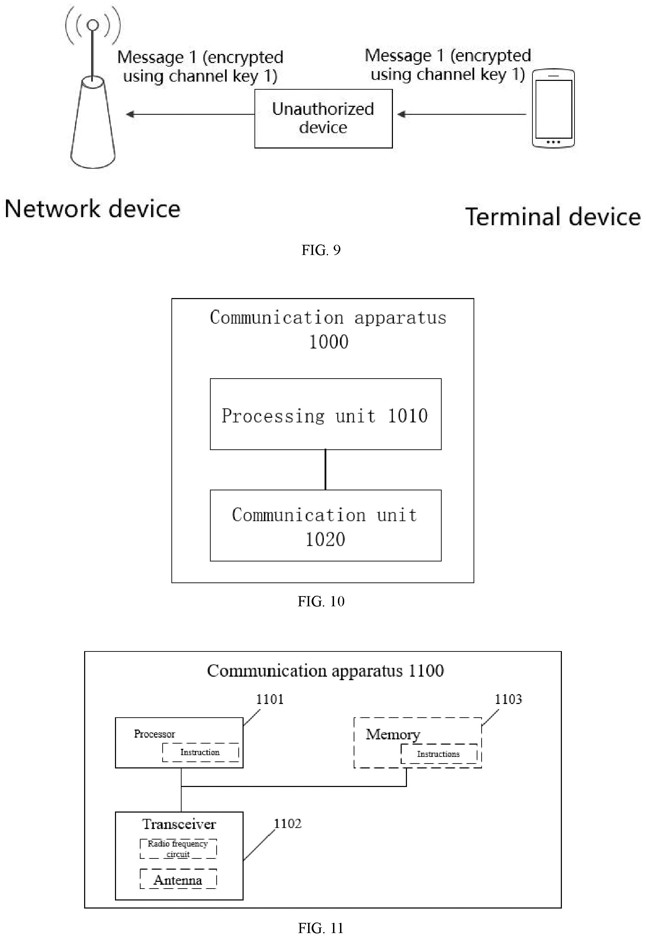

When the terminal device is in the RRC connected state, if a man-in-the-middle attack exists, the message between the terminal device and the network device may be tampered with by the man-in-the-middle, thereby affecting data security. If the method provided in this application is applied to the terminal device in the RRC connected state, because the encryption or integrity protection is performed on the message between the terminal device and the network device by using a channel key, a man-in-the-middle cannot tamper with an intercepted message, thereby improving data transmission. In addition, by using the method provided in this application, whether a man-in-the-middle attack exists may be further detected. For example, as shown in FIG. 9, it is assumed that there is a man-in-the-middle, that is, an unauthorized device in the figure. Because the terminal device cannot identify the unauthorized device, the terminal device considers the unauthorized device as the network device and establishes a connection with the unauthorized device. If a channel key 1 is generated between the terminal device and the unauthorized device by using the method provided in this application, the terminal device and the unauthorized device separately use the channel key 1 to perform encryption or integrity protection on messages respectively sent by the terminal device and the unauthorized device. After establishing the connection to the terminal device, the unauthorized device may generate channel key 2 by using the method provided in this application, and the unauthorized device and the terminal device separately use the channel key 1 to perform encryption or integrity protection on messages respectively sent by the unauthorized device and the terminal device. Because a channel status between the network device and the unauthorized device is different from a channel status between the terminal device and the unauthorized device, the channel key 1 and the channel key 2 are two different keys. If the unauthorized device forwards, to the network device, the message 1 encrypted by the terminal device by using the channel key 1, because the network device cannot decrypt the message 1 by using the channel key 2, it may be determined that an unauthorized device attack exists.

It may be understood that, to implement the functions in the foregoing embodiments, the terminal device and the network device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

The following are diagrams of possible structures of communication apparatuses according to embodiments of this application. These communication apparatuses may be configured to implement functions of the terminal device or the network device in the foregoing method embodiments, and therefore can also achieve beneficial effects of the foregoing method embodiments.

As shown in FIG. 10, a communication apparatus 1000 includes a processing unit 1010 and a communication unit 1020. The communication apparatus 1000 may be configured to implement functions of the terminal device or the network device in the foregoing method embodiments.

When the communication apparatus 1000 is configured to implement the functions of the terminal device, specific content is as follows.

The communication unit is configured to receive first configuration information from a network device, where the first configuration information indicates M parameter sets, each parameter set corresponds to one preset condition, one parameter set includes at least one parameter, and M is an integer greater than 0.

The processing unit is configured to: determine a first channel measurement result based on a first reference signal from the network device; and determine a first channel key based on the first channel measurement result when the first channel measurement result and N parameter sets meet N preset conditions corresponding to the N parameter sets, where the N parameter sets are parameter sets of the M parameter sets, N is an integer greater than 0, and the first channel key is used to perform encryption or integrity protection on data of the network device.

When the communication apparatus 1000 is configured to implement the functions of the network device, specific content is as follows.

The communication unit is configured to send first configuration information to a terminal device, where the first configuration information indicates M parameter sets, each parameter set corresponds to one preset condition, one parameter set includes at least one parameter, and M is an integer greater than 0.

The processing unit is configured to: measure a second reference signal from the terminal device, to obtain a second channel measurement result; and determine a second channel key based on the second channel measurement result, where the second channel key is used to perform encryption or integrity protection on data of the terminal device.

For more detailed descriptions about the processing unit 1010 and the communication unit 1020, directly refer to related descriptions in the foregoing method embodiments. Details are not described herein.

It should be understood that division of the units in the foregoing apparatus is merely logical function division. In an actual implementation, all or a part of the units may be integrated into one physical entity, or may be physically separate. In addition, all of the units in the apparatus may be implemented in a form of software invoked by a processing element, or may be implemented in a form of hardware; or a part of the units may be implemented in a form of software invoked by a processing element, and a part of the units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or a part of the units may be integrated, or may be implemented independently. The processing element herein may also be referred to as a processor, and may be an integrated circuit having a signal processing capability. In an implementation process, the operations in the foregoing methods or the foregoing units may be implemented through a hardware integrated logic circuit in a processor element, or may be implemented in the form of software invoked by a processing element.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate arrays, FPGAs), or a combination of at least two of these forms of integrated circuits. For another example, when the unit in the apparatus is implemented in a form of scheduling a program by the processing element, the processing element may be a processor, for example, a general-purpose central processing unit (central processing unit, CPU) or another processor that may invoke the program. For another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

In another possible product form, the terminal device or the network device in embodiments of this application may be implemented by using a general bus architecture. For ease of description, FIG. 11 is a diagram of a structure of a communication apparatus 1100 according to an embodiment of this application. The communication apparatus 1100 includes a processor 1101 and a transceiver 1102. The communication apparatus 1100 may be a terminal device, or a chip or a chip system in the terminal device. Alternatively, the communication apparatus 1100 may be a network device, or a chip or a module in the network device. FIG. 11 shows only main components of the communication apparatus 1100. In addition to the processor 1101 and the transceiver 1102, the communication apparatus 1100 may further include a memory 1103 and an input/output apparatus (not shown in the figure).

Optionally, the processor 1101 is mainly configured to: process a communication protocol and communication data, control the entire communication apparatus, execute a software program, and process data of the software program. The memory 1103 is mainly configured to store the software program and data. The transceiver 1102 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 1101, the transceiver 1102, and the memory 1103 may be connected through a communication bus.

After the communication apparatus is powered on, the processor 1101 may read the software program in the memory 1103, interpret and execute instructions of the software program, and process the data of the software program. When data needs to be sent wirelessly, the processor 1101 performs baseband processing on the to-be-sent data, and then outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal by using the antenna, converts the radio frequency signal into a baseband signal, and outputs the baseband signal to the processor 1101. The processor 1101 converts the baseband signal into data, and processes the data.

In another implementation, the radio frequency circuit and the antenna may be disposed independently of the processor for baseband processing. For example, in a distributed scenario, the radio frequency circuit and the antenna may be remotely disposed independently of the communication apparatus.

In some embodiments, in terms of hardware implementation, a person skilled in the art may figure out that the communication apparatus 1000 may be in a form of the communication apparatus 1100 shown in FIG. 11.

In an example, a function/an implementation process of the processing unit 1010 in FIG. 10 may be implemented through the processor 1101 in the communication apparatus 1100 shown in FIG. 11 by invoking computer-executable instructions stored in the memory 1103. A function/an implementation process of the communication unit 1020 in FIG. 10 may be implemented through the transceiver 1102 in the communication apparatus 1100 shown in FIG. 11.

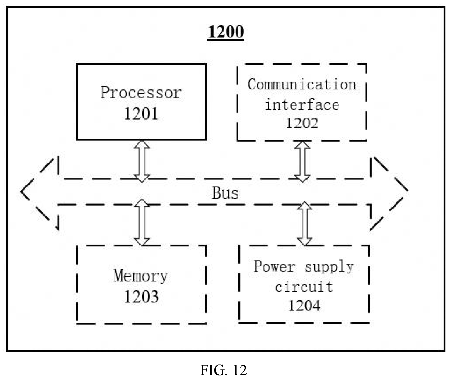

In another possible product form, the terminal device or the network device in this application may use a composition structure shown in FIG. 12, or include components shown in FIG. 12. FIG. 12 is a diagram of composition of a communication apparatus 1200 according to this application.

As shown in FIG. 12, the communication apparatus 1200 includes at least one processor 1201. Optionally, the communication apparatus further includes a communication interface 1202.

When related program instructions are executed in the at least one processor 1201, the apparatus 1200 may be caused to implement the method provided in any one of the foregoing embodiments and any possible design thereof. Alternatively, the processor 1201 is configured to implement, through a logic circuit or by executing code instructions, the method provided in any one of the foregoing embodiments and any possible design of the method.

The communication interface 1202 may be configured to receive the program instructions and transmit the program instructions to the processor. Alternatively, the communication interface 1202 may be configured to perform communication interaction between the communication apparatus 1200 and another communication device, for example, exchange control signaling and/or service data. For example, the communication interface 1202 may be configured to receive a signal from an apparatus other than the communication apparatus 1200, and transmit the signal to the processor 1201; or send a signal from the processor 1201 to a communication apparatus other than the communication apparatus 1200.

Optionally, the communication interface 1202 may be a code and/or data read/write interface circuit, or the communication interface 1202 may be a signal transmission interface circuit between a communication processor and a transceiver, or may be a pin of a chip.

Optionally, the communication apparatus 1200 may further include at least one memory 1203, and the memory 1203 may be configured to store related program instructions and/or data that are/is required. It should be noted that the memory 1203 may exist independently of the processor 1201, or may be integrated with the processor 1201. The memory 1203 may be located inside the communication apparatus 1200, or may be located outside the communication apparatus 1200. This is not limited.

Optionally, the communication apparatus 1200 may further include a power supply circuit 1204, and the power supply circuit 1204 may be configured to supply power to the processor 1201. The power supply circuit 1204 may be located in a same chip as the processor 1201, or may be located in a chip other than a chip in which the processor 1201 is located.

Optionally, the communication apparatus 1200 may further include a bus, and parts of the communication apparatus 1200 may be interconnected through the bus.

In some embodiments, in terms of hardware implementation, a person skilled in the art may figure out that the communication apparatus 1000 shown in FIG. 10 may be in a form of the communication apparatus 1200 shown in FIG. 12.

In an example, a function/an implementation process of the processing unit 1010 in FIG. 10 may be implemented through the processor 1201 in the communication apparatus 1200 shown in FIG. 12 by invoking computer-executable instructions stored in the memory 1203. A function/an implementation process of the communication unit 1020 in FIG. 10 may be implemented through the communication interface 1202 in the communication apparatus 1200 shown in FIG. 12.

It should be noted that the structure shown in FIG. 12 does not constitute a specific limitation on the terminal device or the network device. For example, in some other embodiments of this application, the terminal device or the network device may include more or fewer components than those shown in the figure, or some components may be combined, or some components may be divided, or different component arrangements may be used. The components shown in the figure may be implemented by hardware, software, or a combination of software and hardware.

When the communication apparatus is a chip used in a terminal, the chip in the terminal implements functions of the terminal in the method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements a function of the base station in the method embodiments. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip of the base station, or may be a DU or another module. The DU herein may be a DU in an open radio access network (open radio access network, O-RAN) architecture.

It can be understood that the processor in the embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read only memory, a programmable read only memory, an erasable programmable read only memory, an electrically erasable programmable read only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions of different embodiments are consistent and may be mutually referenced, and technical features in different embodiments may be combined based on an internal logical relationship thereof, to form a new embodiment.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Apparently, a person skilled in the art may make various modifications and variations to this application without departing from the scope of this application. In this case, this application is also intended to cover these modifications and variations of this application provided that such modifications and variations fall within the scope of protection defined by the claims of this application and equivalent technologies thereof.

## Claims

1. A channel key determining method, comprising:
receiving first configuration information from a network device, wherein the first configuration information indicates M parameter sets, each parameter set corresponds to one preset condition, one parameter set comprises at least one parameter corresponding to a channel feature or channel quality, and M is an integer greater than 0;
determining a first channel measurement result based on a first reference signal from the network device; and
determining a first channel key based on the first channel measurement result when the first channel measurement result and N parameter sets meet N preset conditions corresponding to the N parameter sets, wherein the N parameter sets are parameter sets of the M parameter sets, N is an integer greater than 0, and the first channel key is used to perform encryption or integrity protection on data of the network device.

2. The method according to claim 1, wherein the M parameter sets comprise at least one of a first parameter set and a second parameter set; and
a parameter comprised in the first parameter set is a parameter corresponding to the channel feature, wherein the channel feature is at least one of the following: a received signal envelope, a channel impulse response, received signal power, and a received signal phase; and a parameter comprised in the second parameter set is a parameter corresponding to the channel quality, wherein the channel quality comprises a signal-to-noise ratio.

3. The method according to claim 2, wherein when the channel feature is the received signal envelope, the channel impulse response, or the received signal power, the parameter comprised in the first parameter set is a first threshold and first duration that correspond to the received signal envelope, the channel impulse response, or the received signal power; and
a preset condition corresponding to the first parameter set comprises:
the channel measurement result is obtained within the first duration, and an absolute value of a difference between the first value of the channel feature comprised in the channel measurement result and a preset first reference value is greater than or equal to the first threshold.

4. The method according to claim 2, wherein when the channel feature is the received signal phase, the parameter comprised in the first parameter set are a second threshold and second duration that correspond to the received signal phase; and
a preset condition corresponding to the first parameter set comprises:
the channel measurement result is obtained within the second duration, and the channel measurement result comprises at least two second values of the channel feature, and an absolute value of a difference between two adjacent second values of the at least two second values is greater than or equal to the second threshold.

5. The method according to claim 2, wherein the channel quality is the signal-to-noise ratio, and the parameter comprised in the second parameter set is a third threshold; and
a preset condition corresponding to the second parameter set comprises:
the channel measurement result comprises at least one third value of the channel quality, and the at least one third value is greater than or equal to the third threshold.

6. The method according to any one of claims 1 to 5, wherein the determining the first channel key based on the first channel measurement result comprises:
determining a value of a first channel feature based on the first channel measurement result, wherein the first channel feature is at least one of the following: a received signal envelope, a channel impulse response, received signal power, and a received signal phase; and
determining the first channel key based on the value of the first channel feature.

7. The method according to claim 6, wherein the method further comprises:
sending a first preamble to the network device, wherein the first preamble indicates the first channel feature.

8. The method according to claim 7, wherein the method further comprises:
receiving second configuration information from the network device, wherein the second configuration information comprises a correspondence between the first preamble and the first channel feature.

9. The method according to claim 6, wherein the method further comprises:
sending a second reference signal to the network device, wherein the second reference signal indicates the first channel feature.

10. The method according to claim 9, wherein the method further comprises:
receiving third configuration information from the network device, wherein the third configuration information comprises a correspondence between the second reference signal and the first channel feature.

11. The method according to any one of claims 6 to 10, wherein the method further comprises:
receiving correction information from the network device, wherein the correction information is determined based on a second channel key, and the second channel key is determined by the network device based on the second reference signal; and
correcting the first channel key based on the correction information, to obtain a corrected first channel key.

12. The method according to claim 11, wherein the method further comprises:
sending first indication information to the network device, wherein the first indication information indicates to use the corrected first channel key to perform encryption or integrity protection on data.

13. The method according to any one of claims 1 to 12, wherein the first configuration information is located in a system information block, a radio resource control RRC release message, or an RRC reconfiguration message.

14. A channel key determining method, comprising:
sending first configuration information from a terminal device, wherein the first configuration information indicates M parameter sets, each parameter set corresponds to one preset condition, one parameter set comprises at least one parameter corresponding to a channel feature or channel quality, and M is an integer greater than 0;
measuring a second reference signal from the terminal device, to obtain a second channel measurement result; and
determining a second channel key based on the second channel measurement result, wherein the second channel key is used to perform encryption or integrity protection on data of the terminal device.

15. The method according to claim 14, wherein the determining the second channel key based on the second channel measurement result comprises:
receiving a first preamble from the terminal device, wherein the first preamble indicates a first channel feature;
determining a value of the first channel feature based on the second channel measurement result, wherein the first channel feature is at least one of the following: a received signal envelope, a channel impulse response, received signal power, and a received signal phase; and
determining the second channel key based on the value of the first channel feature.

16. The method according to claim 14, wherein the determining the second channel key based on the second channel measurement result comprises:
determining, based on the second channel measurement result, a value of a first channel feature corresponding to the second reference signal, wherein the first channel feature is at least one of the following: a received signal envelope, a channel impulse response, received signal power, and a received signal phase; and
determining the second channel key based on the value of the first channel feature.

17. The method according to any one of claims 14 to 16, wherein the method further comprises:
sending correction information to the terminal device, wherein the correction information is determined based on the second channel key, the correction information is used to correct a first channel key, and the first channel key is a channel key determined by the terminal device.

18. The method according to any one of claims 14 to 17, wherein the configuration information is located in a system information block SIB 2, a radio resource control RRC release message, or an RRC reconfiguration message.

19. A communication apparatus, comprising:
a communication unit, configured to receive first configuration information from a network device, wherein the first configuration information indicates M parameter sets, each parameter set corresponds to one preset condition, one parameter set comprises at least one parameter corresponding to a channel feature or channel quality, and M is an integer greater than 0; and
a processing unit, configured to: determine a first channel measurement result based on a first reference signal from the network device; and determine a first channel key based on the first channel measurement result when the first channel measurement result and N parameter sets meet N preset conditions corresponding to the N parameter sets, wherein the N parameter sets are parameter sets of the M parameter sets, N is an integer greater than 0, and the first channel key is used to perform encryption or integrity protection on data of the network device.

20. A communication apparatus, comprising:
a communication unit, configured to send first configuration information from a terminal device, wherein the first configuration information indicates M parameter sets, each parameter set corresponds to one preset condition, one parameter set comprises at least one parameter corresponding to a channel feature or channel quality, and M is an integer greater than 0; and
a processing unit, configured to: measure a second reference signal from the terminal device, to obtain a second channel measurement result; and determine a second channel key based on the second channel measurement result, wherein the second channel key is used to perform encryption or integrity protection on data of the terminal device.

21. A communication apparatus, comprising a processor and a memory, wherein
the processor is configured to execute a computer program or instructions stored in the memory, to cause the communication apparatus to perform the method according to any one of claims 1 to 18.

22. A computer-readable storage medium, storing a computer program or instructions, wherein when the computer program or the instructions are run on a computer, the computer is caused to perform the method according to any one of claims 1 to 18.

23. A chip, comprising a processor, wherein the processor is coupled to a memory, and is configured to execute a computer program or instructions stored in the memory, to cause the chip to perform the method according to any one of claims 1 to 18.

24. A computer program product, wherein when a computer reads and executes the computer program product, the method according to any one of claims 1 to 18 is caused to be performed.
